# EUROPÄISCHE PATENTSCHRIFT

(11) **EP 1 993 870 B1**
(45) Veröffentlichungstag und Bekanntmachung des Hinweises auf die Patenterteilung: **25.03.2015**
(21) Anmeldenummer: 07711392.6
(22) Anmeldetag: 27.01.2007
(51) Int. Cl.: B60L 5/00, H02J 5/00

(54) **ANLAGE UND VERFAHREN**
INSTALLATION AND METHOD
ÉQUIPEMENT ET PROCÉDÉ

(30) Priorität: 02.03.2006 DE 102006010256
(43) Veröffentlichungstag der Anmeldung: 26.11.2008
(60) Teilanmeldung: 11004364.3
(73) Patentinhaber: SEW-EURODRIVE GmbH & Co. KG, 76646 Bruchsal (DE)
(72) Erfinder: WOLF, Harald, 76698 Ubstadt-Weiher (DE); TREIER, Christian, 76131 Karlsruhe (DE); SCHMIDT, Josef, 76676 Graben-Neudorf (DE)
(86) Internationale Anmeldenummer: PCT/EP2007/000712
(87) Internationale Veröffentlichungsnummer: WO 2007/098836

(56) Entgegenhaltungen:
- DE-B3- 10 349 242
- JP-A- 57 088 871
- JP-A- 57 126 269
- JP-A- 2002 067 747
- JP-A- 2005 313 884

## Beschreibung

Die Erfindung betrifft eine Anlage und ein Verfahren.

Aus der JP 2002067747 ist ein System zur berührungslosen Energieübertragung bekannt, bei dem mehrere Streckenabschnitte von verschiedenen Einspeisungen synchronisiert gespeist werden. Dabei wird ein clock Signal, also Taktsignal, von einem Master- an einen Slave-Streckenabschnitt übermittelt, wobei Licht verwendet wird. Nachteilig ist dabei, dass die Phasenlage von Strömen bestimmt werden muss, insbesondere in aufwendiger Weise mit **Strom-Sensoren.**

**Aus der** JP 2005 313884 A **ist ebenfalls ein** System zur berührungslosen Energieübertragung bekannt.

**Aus der** JP 57 126269 A **ist eine Phasensteuerschaltung bekannt.**

**Aus der** JP 57 088871 A **ist ein digitaler Phasensynchronisierer bekannt.**

**Aus der** DE 103 49 242 B3 **ist eine Vorrichtung zur berührungslosen Übertragung elektrischer Leistung bekannt, bei dem Informationen übertragen werden, wenn der Strom im Primärleiter der Vorrichtung unterhalb eines Schwellwertes ist.**

**Aus der** JP 11 206 043 A **ist eine kontaktlose Leistungsübertragung bekannt, wobei mehrere Stromquellen mit gleicher Phase als Speisequelle fungieren.**

**Aus der** US 2003/200025 A1 **ist ein Elektrofahrzeug bekannt, das eine automatische Spurführung aufweist und induktiv versorgt wird.**

Der Erfindung liegt daher die Aufgabe zugrunde, ein solches System weiterzubilden, wobei eine möglichst einfache und kostengünstige Synchronisierung erreichbar sein soll.

Erfindungsgemäß wird die Aufgabe bei der Anlage nach den in Anspruch 1 und bei dem Verfahren nach den in Anspruch 10 angegebenen Merkmalen gelöst.

Wesentliche Merkmale der Erfindung bei der Anlage sind, dass sie Streckenabschnitte umfasst,
wobei jeder Streckenabschnitt eine Versorgungsleitung umfasst, in die ein mittelfrequenter Strom von einer dem jeweiligen Streckenabschnitt zugeordneten Einspeisung einspeisbar ist,
**wobei** jede Einspeisung eine Steuerschaltung umfasst,
wobei eine erste der Steuerschaltungen, insbesondere Master, ein Taktsignal zum Synchronisieren der weiteren Einspeisungen an diese, insbesondere Slave, übermittelt.

Von Vorteil ist dabei, dass die Ströme der Streckenabschnitte synchronisierbar sind ohne , dass ein Stromwert erfasst werden muss und ohne dass die Phasenlage eines Stromes bestimmt werden muss. Es genügt also bei der Erfindung, im digitalen Teil der Umrichter Synchronisierung zu erreichen und die vorteilhaften Eigenschaften von Gyratoren zu Nutze zu machen, nämlich die Unabhängigkeit der Phasenverschiebung zwischen Eingangsspannung und Ausgangsstrom von der Last.

**Erfindungsgemäß** ist die Steuerschaltung als digitales System ausgeführt. Von Vorteil ist dabei, dass die Synchronisierung der Ausgangsströme der Einspeisungen erreichbar ist, indem die digitalen Teile der Einspeisungen synchronisiert werden. Beispielsweise ist also die Ansteuerelektronik für die Endstufe eines Umrichters, insbesondere Zwischenkreisspannungsumrichters, synchronisiert betreibbar.

**Erfindungsgemäß** basiert die Synchronisierung nur auf Informationen, die im digitalen Teil der Einspeisung vorhanden sind. Von Vorteil ist dabei, dass die nachfolgenden elektronischen Bauteile derart ausführbar sind, dass trotz der komplexen Schaltungstechnik die Ausgangsströme synchronisierbar sind.

**Erfindungsgemäß** umfasst die Einspeisung eine pulsweitenmodulierbar betreibbare mittelfrequente Spannungsquelle, deren Ausgangsspannung einem Spannungs-Strom-Wandler, insbesondere Gyrator, zuführbar ist, dessen Ausgangsstrom in die Versorgungsleitung einspeisbar ist. Von Vorteil ist dabei, dass ein Umrichter zur Realisierung einer mittelfrequenten Spannungsquelle verwendbar ist. Durch bloßes Umwandeln der Spannungsquelle in eine Stromquelle mit passiven Elementen ist somit die Stromquelle realisierbar. Da die Synchronisierung im digitalen Teil der Umrichter vorgenommen wurde, muss keine Stromerfassung zum Zwecke der Synchronisierung eingesetzt werden. Somit wird eine besonders einfache und kostengünstige Synchronisierung erreicht.

Bei einer vorteilhaften Ausgestaltung ist Spannungs-Strom-Wandler und/oder die Induktivität der Versorgungsleitung mit zugeordneten Kapazitäten im Wesentlichen in Resonanz abgestimmt auf die Mittelfrequenz. Von Vorteil ist dabei, dass die Phasenverschiebung konstant ist und unabhängig von den angeschlossenen Verbrauchern.

Bei einer vorteilhaften Ausgestaltung sind Verbraucher aus der Versorgungsleitung induktiv versorgbar, insbesondere die Verbraucher eine Sekundärspule umfassen, die induktiv an die als Primärleiter ausgeführte Versorgungsleitung ankoppelbar ist, insbesondere wobei der Sekundärspule eine Kapazität in Serie oder parallel derart geschaltet ist, die Resonanzfrequenz im Wesentlichen der Mittelfrequenz gleicht. Von Vorteil ist dabei, dass die Verbraucher berührungslos versorgbar sind.

Bei einer vorteilhaften Ausgestaltung ist die Steuerschaltung zum Erzeugen der pulsweitenmodulierten Ansteuersignale der Endstufe vorgesehen. Von Vorteil ist dabei, dass bekannte Umrichter nur wenig modifiziert werden müssen.

Bei einer vorteilhaften Ausgestaltung umfasst die Steuerschaltung jeder weiteren Einspeisung Mittel zum Variieren der Pulsweitenmodulationsperiode, wobei die Periodendauer abhängig von der Phasenabweichung des Taktsignals der ersten Einspeisung zum Pulsweitenmodulationssignal verändert wird. Von Vorteil ist dabei, dass in einfacher und kostengünstiger Weise eine Synchronisierung erreichbar ist.

Bei einer vorteilhaften Ausgestaltung liegt der Änderungsbetrag der Pulsweitenmodulationsperiode pro Periode betragsmäßig unterhalb eines Wertes, insbesondere zum Begrenzen der Frequenzabweichung von der Taktsignalfrequenz. Von Vorteil ist dabei, dass die Frequenz nicht sprunghafte Änderungen erfährt und somit große Frequenzabweichungen vermieden werden.

Bei einer vorteilhaften Ausgestaltung wird abhängig von der Phasenabweichung des Taktsignals der ersten Einspeisung zum Pulsweitenmodulationssignal die Ausgangsfrequenz einer Oszillatorschaltung der weiteren Einspeisung geändert, insbesondere zum Ändern der Grundtaktfrequenz für einen Mikrocontroller der weiteren Einspeisung. Von Vorteil ist dabei, dass in einfacher und kostengünstiger Weise eine Synchronisierung erreichbar ist.

Bei einer vorteilhaften Ausgestaltung wird abhängig von der Phasenabweichung des Taktsignals der ersten Einspeisung zum Pulsweitenmodulationssignal die Periodendauer des zeitlichen Verlaufs eines Zählerinhaltes verändert. Von Vorteil ist dabei, dass in einfacher und kostengünstiger Weise eine Synchronisierung erreichbar ist.

Bei einer vorteilhaften Ausgestaltung wird das Taktsignal vom Bussystem, insbesondere Feldbussystem und/oder Ethernet, übermittelt. Von Vorteil ist dabei, dass bekannte Bussystem einsetzbar sind.

Bei einer vorteilhaften Ausgestaltung sind mittels des Bussystems über das Taktsignal hinaus weitere Daten übertragbar. Von Vorteil ist dabei, dass weitere Sicherheits- oder Steuerungsdaten übertragbar sind.

Wichtige Merkmale bei dem Verfahren zum Betreiben einer Anlage sind, dass eine erste Einspeisung weiteren Einspeisungen ein Taktsignal übermittelt,
wobei das Taktsignal in der ersten Einspeisung derart erzeugt wird, das synchron ist zu Ansteuersignalen einer Endstufe, insbesondere einer elektronische Leistungshalbleiter umfassenden Endstufe zur Erzeugung einer Ausgangsspannung. Von Vorteil ist dabei, dass im digitalen Teil die Synchronisierung erreichbar ist.

Bei einer vorteilhaften Ausgestaltung werden das Taktsignal und die Schaltzeitpunkte der Ansteuersignale von demselben digitalen zeitbestimmenden Mittel, insbesondere Zähler, abgeleitet. Von Vorteil ist dabei, dass die Ausführung in einfacher und kostengünstiger Software möglich ist.

Bei einer vorteilhaften Ausgestaltung führen die weiteren Einspeisungen die Erzeugung von pulsweitenmodulierten Ansteuersignalen derart aus, dass eine Synchronisierung der Ansteuersignale, insbesondere Pulsweitenmodulationssignale, zum Taktsignal erreicht wird. Von Vorteil ist dabei, dass die Ansteuersignale, beispielsweise die PWM-Ansteuersignale, synchron ausführbar sind ohne besonderen zusätzlichen Aufwand.

Bei einer vorteilhaften Ausgestaltung wird zum Erreichen der Synchronisierung ein Regler verwendet. Insbesondere wird dem Regler eine Phasendifferenz zugeführt. Von Vorteil ist dabei, dass aus der Phasendifferenz als Regelabweichung die Periodendauer eines Taktgebers, wie Oszillatorschaltung oder Timer, veränderbar ist und somit die Synchronisierung erreichbar ist. Der Taktgeber ist in Software und/oder Hardware realisierbar.

Bei einer vorteilhaften Ausgestaltung wird vom Ausgang des Reglers die Pulsweitenmodulationsperiodendauer, also PWM-Periodendauer, beeinflusst. Von Vorteil ist dabei, dass geringfügige Einflussnahme auf die PWM-Periodendauer genügt, um die Synchronisierung zu erreichen.

Bei einer vorteilhaften Ausgestaltung wird die jeweilige Phasendifferenz aus der Phase des jeweiligen Pulsweitenmodulationssignals und des Taktsignals bestimmt. Von Vorteil ist dabei, dass zur Bestimmung der Phase beispielsweise Flanken der Signale und/oder ein Vergleich mit charakteristischen Werten herangezogen werden können und somit in einfacher, aber sehr genauer Weise eine Bestimmung der Phasendifferenz ausführbar ist.

Bei einer vorteilhaften Ausgestaltung wird die Frequenzänderung oder Periodendaueränderung durch den Regler nur mit einer begrenzten maximalen Rate ausgeführt. Von Vorteil ist dabei, dass die Frequenz des Slaves im Wesentlichen ungeändert bleibt. Die kleinen geringfügigen Frequenzverstimmungen ändern die Frequenz nur unwesentlich, reichen aber zur Anpassung der Phase und auch Frequenz aus.

Weitere Vorteile ergeben sich aus den Unteransprüchen.

Die Erfindung wird nun anhand von Abbildungen näher erläutert:

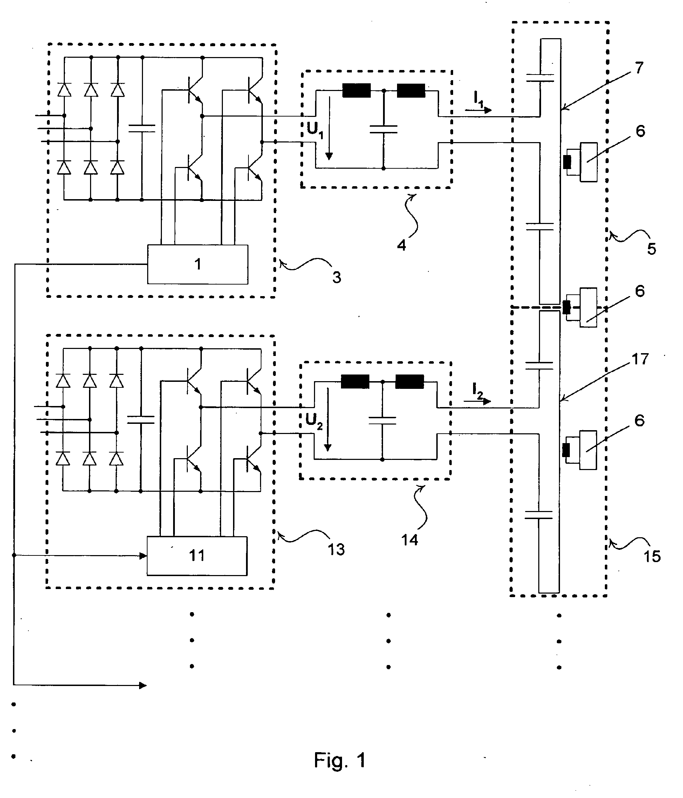

In der Figur 1 ist eine erfindungsgemäße Anlage schematisch gezeichnet. Dabei sind die induktiv versorgbaren Verbraucher 6 entlang eines Primärleiters bewegbar. Es ist außerdem ein erster Streckenabschnitt 5 gezeigt, dessen Primärleiter 7 aus dem Spannungszwischenkreisumrichter 3 über den Spannungs-Strom-Wandler 4 versorgbar ist. Der Spannungszwischenkreisumrichter 3 ist als mittelfrequente Spannungsquelle vorsehbar, insbesondere mit einer Ausgangsfrequenz zwischen 1 und 100 kHz .

Der Spannungszwischenkreisumrichter 3 umfasst einen vom Netz versorgten Gleichrichter, dem ein Kondensator, also der Zwischenkreiskondensator, nachgeschaltet ist, aus dem die Endstufe, insbesondere ein Wechselrichter, versorgbar ist.

Der Wechselrichter speist den Spannungs-Strom-Wandler 4, der hier als sogenannter Gyrator ausgeführt ist. Wesentlich ist dabei, dass das Spannungsquellen-Verhalten des Umrichters 3 in ein Stromquellen-Verhalten am Ausgang des Spannungs-Strom-Wandlers 4 überführt wird. Am Spannungs-Strom-Wandler 4 ist die Amplitude seines Ausgangswechselstroms proportional zur Amplitude seiner Eingangswechselspannung unabhängig von den Verbrauchern.

Somit ist in den Primärleiter des ersten Streckenabschnittes 5 ein Strom einspeisbar, wobei zur Anpassung der Resonanzfrequenz der Induktivität des Primärleiters an die Mittelfrequenz Kondensatoren im Streckenabschnitt 5 vorgesehen sind.

Der zweite Streckenabschnitt 15 umfasst wiederum einen Primärleiter 17, welcher in gleicher Art über den Spannungs-Strom-Wandler 14 aus dem Umrichter 13 versorgbar ist, der vom Netz versorgbar ist, insbesondere Drehstrom-Versorgungs-Netz.

Damit die Verbraucher 6 beim Übergang vom ersten Streckenabschnitt 5 zum zweiten Streckenabschnitt 15 kontinuierlich versorgbar sind, müssen die Ströme der Primärleiter (7,17) zueinander synchron sein, also in Frequenz und Phasenlage möglichst genau übereinstimmen.

Wichtig ist nun bei der vorliegenden Erfindung, dass die Synchronisierung dadurch erreicht wird, dass die Steuerschaltung 1 des ersten Umrichters 3 und die Steuerschaltung 11 des weiteren Umrichters 13 und gegebenenfalls weitere Steuerschaltungen 11 von weiteren Umrichtern synchronisiert werden.

Hierzu ist eine Leitung 2 zur Übermittelung eines Taktsignals vorgesehen. Das Taktsignal wird von der ersten Steuerschaltung 1 erzeugt und an alle weiteren Steuerschaltungen 11 übermittelt.

Bei weiteren erfindungsgemäßen Ausführungsbeispielen ist die Übermittelung mittels eines Bussystems vorsehbar, das beispielsweise als Feldbus, wie CAN-Bus, Profibus oder Interbus, ausführbar ist.

Die weiteren Steuerschaltungen 11 bei Figur 1 sind derart ausgeführt, dass die Ausgangsspannungen der Umrichter (3, 13) synchron verlaufen und somit auch der zum jeweiligen Streckenabschnitt gehörende Strom im Primärleiter synchron ist.

Denn die Spannungs-Strom-Wandler sind derart ausgeführt, dass die Phasenverschiebung, also relative Phasenlage, der Eingangsspannung zum Ausgangsstrom konstant und unabhängig von der Last, also Verbrauchern, ist.

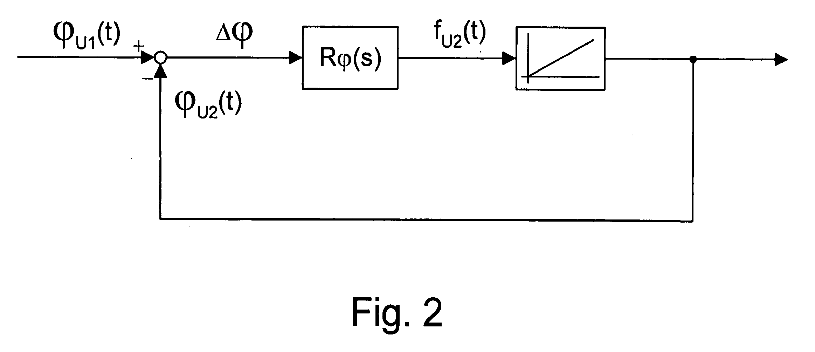

In Figur 2 sind die Mittel zum Herstellen der Synchronisierung näher dargestellt. Dabei ist das von der Steuerschaltung 1 stammende Taktsignal zur Ausgangsspannung U₁ des Umrichters 3 synchron.

Die zugehörige Information über Phasenlage ist in Figur 2 mit *ϕ*_{*U*1}(*t*) bezeichnet und wird als Sollwert mit dem Istwert, nämlich der Phasenlage *ϕ*_{*U*2}(*t*) der Ausgangsspannung U₂ des Umrichters 13, verglichen. Die Regelabweichung Δ*ϕ* wird dem Regler *Rϕ*(*s*) zugeführt, der die Frequenz f_{U2}(t) der mittelfrequenten Ausgangsspannung U₂ erzeugt. Die Phasenlage *ϕ*_{*U*2}(*t*) ergibt sich durch Integration dieser Frequenz f_{U2}(t).

Durch die in Figur 2 beschriebene Regelstruktur des Umrichters 13 wird also die Phasenlage der Ausgangsspannungen der Umrichter (1,13) synchronisiert. Somit sind nicht nur die Frequenzen sondern auch die Phasen der Ausgangsspannungen synchron. Daraus ergibt sich dann auch, dass die Ströme der Primärleiter synchron sind.

Denn die Spannungs-Strom-Wandler (4,14) sind auf die Mittelfrequenz abgestimmt. Insbesondere bei Ausführung der Wandler als Gyrator oder äquivalente Schaltungsart sind die Induktivitäten und Kapazitäten derart bemessen, dass die Resonanzfrequenz dieses Gyrators oder der äquivalenten Schaltungsart der Mittelfrequenz entspricht oder zumindest im Wesentlichen entspricht.

Bei weiteren erfindungsgemäßen Ausführungsbeispielen sind auch über das Taktsignal hinaus weitere Daten über die Leitung 2, insbesondere Bussystem, übertragbar.

Bei weiteren erfindungsgemäßen Ausführungsbeispielen ist als Regler ein P-Regler, ein PI-Regler oder ein PID-Regler verwendbar. Es sind auch weitere bekannte Regler vorteilhaft.

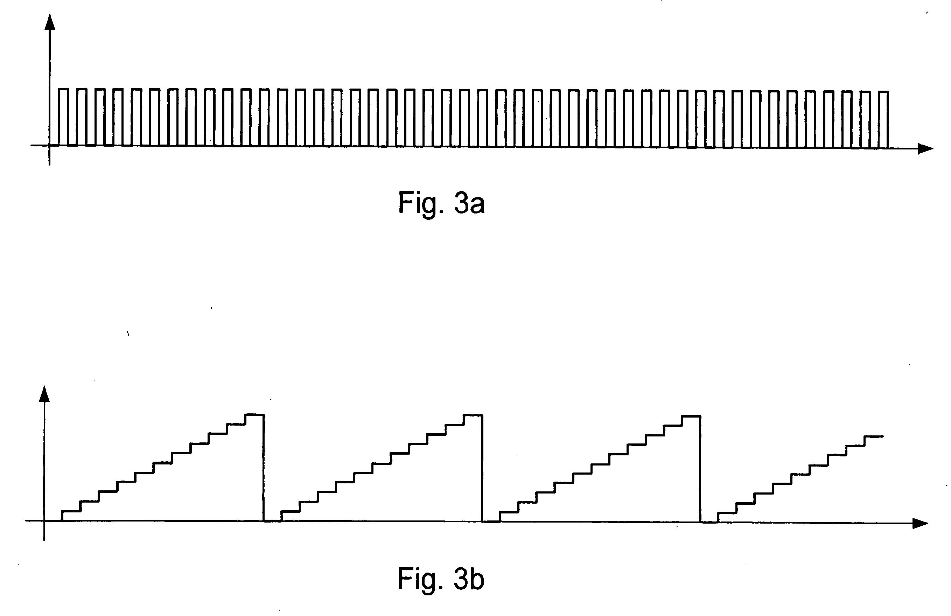

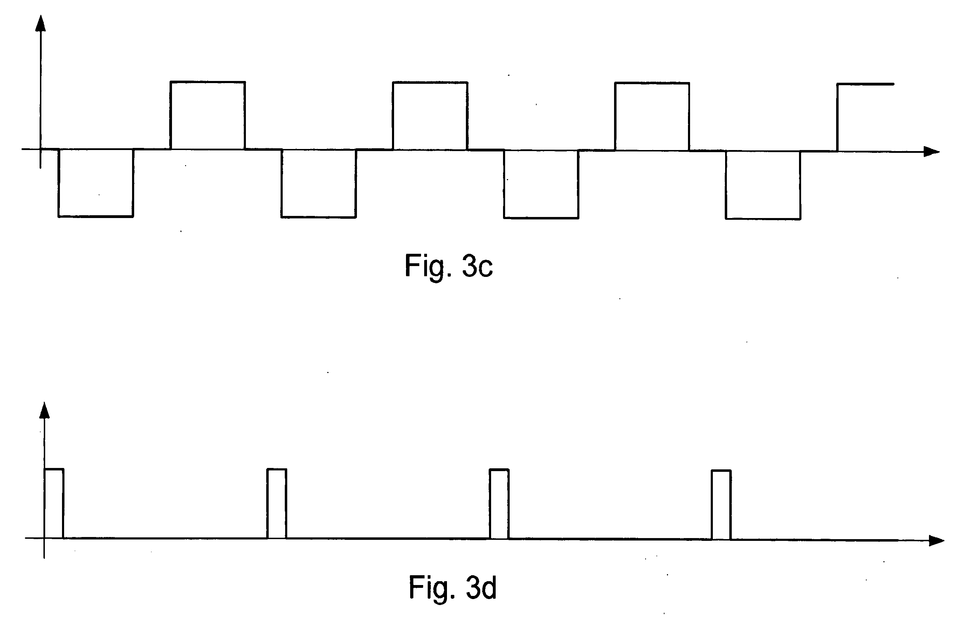

Ein weiteres erfindungsgemäßes Ausführungsbeispiel ist in Figur 3a bis 3d gezeigt. Dabei ist die Ausführung zeitdiskret. Die Steuerschaltung umfasst einen Oszillator, der ein Grundtaktsignal erzeugt, wie in Figur 3a dargestellt. Beispielsweise ist die Erzeugung mittels einer einen Quarz umfassenden Oszillatorschaltung ausgeführt. Daraus wird ein in Figur 3b bildlich dargestellter Zählerinhalt generiert, der mittels Komparatoren mit vier vorgebbaren Werten verglichen wird. Aus den vier Vergleichsergebnissen werden die Schaltzeitpunkte für die Endstufe bestimmt und somit die Ausgangsspannung U1 erzeugt, die in Figur 3c dargestellt ist. Durch einen weiteren Vergleich mit einem weiteren Wert wird das Taktsignal nach Figur 3d erzeugt, das somit synchron zum zeitlichen Verlauf des Zählerinhalts nach Figur 3b ist und auch eine gleiche Phasenlage aufweist.

Der Umrichter 13 weist ebenfalls eine Oszillatorschaltung auf, taktet einen Zähler und generiert somit wiederum einen zeitlichen Verlauf eines Zählerinhaltes. Je nach Phasenlage des Taktsignals zum zeitlichen Verlauf des Zählerinhaltes wird die folgende Periodendauer verlängert oder verkürzt.

Hierzu wird in der auf die Flanke des Taktsignals folgenden Periode die Periodendauer oder der Überlaufwert des Zählers um eins verlängert oder verkürzt. Auf diese Weise folgt die Phasenlage des Slave-Umrichters mit begrenzter Änderungsgeschwindigkeit der Phasenlage der Ausgangsspannung des Umrichters 3, also des Masters.

Bei weiteren erfindungsgemäßen Ausführungsbeispielen wird die Oszillatorschaltung als VCO-Schaltung ausgeführt. Dies bedeutet, dass die Frequenz der Oszillatorschaltung verstimmbar ist abhängig von einer anzulegenden Signalspannung. Somit ist der Umrichter 13 nur derart auszuführen, dass der Regler aus dem Phasenvergleich des Taktsignals mit einem Spannungsverlauf des Umrichters 13 eine Signalspannung bewirkt, die die Frequenz der VCO ändert. Vorteilig ist dabei, dass die Software und/oder Hardware nicht wesentlich geändert werden muss und eine feinere Stufung vorsehbar ist.

Bei weiteren erfindungsgemäßen Ausführungsbeispielen wird die Synchronisierung der Einspeisungen verwendet, um die Ausgänge der Spannungs-Strom-Wandler parallel zusammenzuschalten zur Speisung nur eines gemeinsamen Streckenabschnittes.

### Bezugszeichenliste

- 1: Steuerschaltung
- 2: Leitung zur Übermittelung eines Taktsignals
- 3: Spannungszwischenkreisumrichter
- 4: Spannungs-Strom-Wandler
- 5: erster Streckenabschnitt
- 6: induktiv versorgbarer Verbraucher
- 7: Primärleiter
- 11: Steuerschaltung
- 13: Spannungszwischenkreisumrichter
- 14: Spannungs-Strom-Wandler
- 15: erster Streckenabschnitt
- 16: induktiv versorgbarer Verbraucher
- 17: Primärleiter

## Patentansprüche

1. Anlage, umfassend Streckenabschnitte (5, 15),
wobei jeder Streckenabschnitt (5, 15) eine Versorgungsleitung umfasst, in die ein mittelfrequenter Strom von einer dem jeweiligen Streckenabschnitt (5, 15) zugeordneten Einspeisung einspeisbar ist,
**wobei** jede Einspeisung eine Steuerschaltung (1, 11) umfasst,
wobei eine erste der Steuerschaltungen (1, 11), insbesondere Master, ein Taktsignal zum Synchronisieren der weiteren Einspeisungen an diese, insbesondere Slave, übermittelt,
**wobei jede Einspeisung eine jeweilige pulsweitenmoduliert betriebene mittelfrequente Spannungsquelle umfasst, deren Ausgangsspannung jeweils einem Gyrator als Spannungs-Strom-Wandler (4,14) zugeführt wird, dessen Ausgangsstrom in die jeweilige Versorgungsleitung eingespeist wird,**
**wobei die Steuerschaltungen (1, 11) Mittel zum Synchronisieren umfassen, mit denen die Ausgangsspannungen mit zueinander synchronisierter Phasenlage erzeugt werden, also phasengleich sind,**
**wobei**
- **die Steuerschaltung (1, 11) als digitales System ausgeführt ist**
**und**
- **die Synchronisierung nur auf Informationen basiert, die im digitalen Teil der Einspeisung vorhanden sind.**

2. Anlage nach Anspruch 1,
**dadurch gekennzeichnet, dass**
der Spannungs-Strom-Wandler (4, 14) und/oder die Induktivität der Versorgungsleitung mit zugeordneten Kapazitäten im Wesentlichen in Resonanz abgestimmt ist auf die Mittelfrequenz.

3. Anlage nach mindestens einem der vorangegangenen Ansprüche,
**dadurch gekennzeichnet, dass**
Verbraucher (6, 16) aus der Versorgungsleitung induktiv versorgbar sind, insbesondere die Verbraucher (6, 16) eine Sekundärspule umfassen, die induktiv an die als Primärleiter (7, 17) ausgeführte Versorgungsleitung ankoppelbar ist, insbesondere wobei der Sekundärspule eine Kapazität in Serie oder parallel derart geschaltet ist, dass die Resonanzfrequenz im Wesentlichen der Mittelfrequenz gleicht.

4. Anlage nach mindestens einem der vorangegangenen Ansprüche,
**dadurch gekennzeichnet, dass**
die Steuerschaltung (1, 11) zum Erzeugen der putsweitenmodulierten Ansteuersignate für die Endstufe vorgesehen ist.

5. Anlage nach mindestens einem der vorangegangenen Ansprüche,
**dadurch gekennzeichnet, dass**
die Steuerschaltung (1, 11) jeder weiteren Einspeisung Mittel zum Variieren der Pulsweitenmodulationsperiode umfasst, wobei die Periodendauer abhängig von der Phasenabweichung des Taktsignals der ersten Einspeisung zum Pulsweitenmodulationssignal verändert wird.

6. Anlage nach mindestens einem der vorangegangenen Ansprüche,
**dadurch gekennzeichnet, dass**
der Änderungsbetrag der Pulsweitenmodulationsperiode pro Periode betragsmäßig unterhalb eines Wertes liegt, insbesondere zum Begrenzen der Frequenzabweichung von der Taktsignalfrequenz.

7. Anlage nach mindestens einem der vorangegangenen Ansprüche,
**dadurch gekennzeichnet, dass**
abhängig von der Phasenabweichung des Taktsignals der ersten Einspeisung zum Pulsweitenmodulationssignal die Ausgangsfrequenz einer Oszillatorschaltung der weiteren Einspeisung geändert wird, insbesondere zum Ändern der Grundtaktfrequenz für einen Mikrocontroller der weiteren Einspeisung.

8. Anlage nach mindestens einem der vorangegangenen Ansprüche,
**dadurch gekennzeichnet, dass**
abhängig von der Phasenabweichung des Taktsignals der ersten Einspeisung zum Pulsweitenmodulationssignal die Periodendauer des zeitlichen Verlaufs eines Zählerinhaltes verändert wird.

9. Anlage nach mindestens einem der vorangegangenen Ansprüche,
**dadurch gekennzeichnet, dass**
das Taktsignal über ein Bussystem, insbesondere Feldbussystem und/oder Ethernet, übermittelt wird
und/oder dass mittels des Bussystems über das Taktsignal hinaus weitere Daten übertragbar sind.

10. Verfahren zum Betreiben einer Anlage, umfassend Streckenabschnitte (5, 15),
wobei jeder Streckenabschnitt (5, 15) eine Versorgungsleitung umfasst, in die ein mittelfrequenter **Strom** von einer dem jeweiligen Streckenabschnitt (5, 15) zugeordneten Einspeisung **eingespeist** wird,
**wobei** jede Einspeisung eine Steuerschaltung (1, 11) umfasst,
wobei eine erste der Steuerschaltungen (1, 11), insbesondere Master, ein Taktsignal zum Synchronisieren der weiteren Einspeisungen an diese, insbesondere Slave, übermittelt,
**wobei jede Einspeisung eine jeweilige pulsweitenmoduliert betriebene mittelfrequente Spannungsquelle umfasst, deren Ausgangsspannung jeweils einem Gyrator als Spannungs-Strom-Wandler (4,14) zugeführt wird, dessen Ausgangsstrom in die jeweilige Versorgungsleitung eingespeist wird,**
**wobei die Steuerschaltungen (1,11) Mittel zum Synchronisieren umfassen, mit denen die Ausgangsspannungen mit zueinander synchronisierter Phasenlage erzeugt werden, also phasengleich sind,**
**wobei**
- **die Steuerschaltung (1, 11) als digitales System ausgeführt ist**
**und**
- **die Synchronisierung nur auf Informationen basiert, die im digitalen Teil der Einspeisung vorhanden sind.**

11. Verfahren nach Anspruch 10,
**dadurch gekennzeichnet, dass**
**wobei das Taktsignal in der ersten Einspeisung synchron zu Ansteuersignalen einer Endstufe erzeugt wird insbesondere einer elektronische Leistungshalbleiter umfassenden Endstufe zur Erzeugung einer Ausgangsspannung,**
**insbesondere wobei das Taktsignal und die Schaltzeitpunkte der Ansteuersignale von demselben digitalen zeitbestimmenden Mittel, insbesondere Zähler, abgeleitet werden.**

12. Verfahren nach Anspruch 10 oder 11,
**dadurch gekennzeichnet, dass**
die weiteren Einspeisungen die Erzeugung von pulsweitenmodulierten Ansteuersignalen derart ausführen, dass eine Synchronisierung der Ansteuersignale, insbesondere Pulsweitenmodulationssignale, zum Taktsignal erreicht wird.

13. Verfahren nach einem der Ansprüche 10 bis 12,
**dadurch gekennzeichnet, dass**
zum Erreichen der Synchronisierung ein Regler verwendet wird,
insbesondere wobei dem Regler eine Phasendifferenz zugeführt wird

14. Verfahren nach Anspruch 13,
**dadurch gekennzeichnet, dass**
vom Ausgang des Reglers die Frequenz einer Oszillatorschaltung beeinflusst wird
und/oder dass
vom Ausgang des Reglers die Pulsweitenmodulationsperiode beeinflusst wird,
insbesondere wobei die jeweilige Phasendifferenz aus der Phase des jeweiligen Pulsweitenmodulationssignals und des Taktsignals bestimmt wird
und/oder dass
die Frequenzänderung oder Periodendaueränderung durch den Regler nur mit einer begrenzten maximalen Rate ausgeführt wird.

## Claims

1. A system, comprising path sections (5, 15),
wherein each path section (5, 15) comprises a supply line into which a medium-frequency current can be fed from an infeed associated with the respective path section (5, 15),
wherein each infeed comprises a control circuit (1, 11),
wherein a first one of the control circuits (1, 11), in particular master, transmits a clock signal for synchronising the further infeeds to these, in particular slave,
wherein each infeed comprises a respective medium-frequency voltage source operated in pulse-width modulated manner, the output voltage of which is supplied in each case to a gyrator as voltage-current converter (4, 14), the output current of which is fed into the respective supply line,
wherein the control circuits (1, 11) comprise means for synchronising with which the output voltages are generated with a phase relation synchronised to each other, i.e. are in phase,
wherein
- the control circuit (1, 11) is embodied as a digital system
and
- the synchronisation is based only on information which is present in the digital portion of the infeed.

2. A system according to Claim 1, **characterised in that**
the voltage-current converter (4, 14) and/or the inductance of the supply line with associated capacitances is substantially adapted in resonance to the medium frequency.

3. A system according to at least one of the preceding claims,
**characterised in that**
consumers (6, 16) can be supplied inductively from the supply line, in particular the consumers (6, 16) comprise a secondary coil which can be coupled inductively with the supply line which is embodied as a primary conductor (7, 17), in particular a capacitor being connected in series with or in parallel to the secondary coil such that the resonant frequency is substantially identical to the medium frequency.

4. A system according to at least one of the preceding claims,
**characterised in that**
the control circuit (1, 11) is provided for generating the pulse-width modulated control signals for the output stage.

5. A system according to at least one of the preceding claims,
**characterised in that**
the control circuit (1, 11) of each further infeed comprises means for varying the pulse-width modulation period, the period duration being changed as a function of the phase deviation of the clock signal of the first infeed relative to the pulse-width modulation signal.

6. A system according to at least one of the preceding claims,
**characterised in that**
the amount of change of the pulse-width modulation period per period in terms of amount lies below a value, in particular for limiting the frequency deviation of the clock signal frequency.

7. A system according to at least one of the preceding claims,
**characterised in that**
the output frequency of an oscillator circuit of the further infeed is changed as a function of the phase deviation of the clock signal of the first infeed relative to the pulse-width modulation signal, in particular for changing the basic clock frequency for a microcontroller of the further infeed.

8. A system according to at least one of the preceding claims,
**characterised in that**
the period duration of the time characteristic of a counter content is changed as a function of the phase deviation of the clock signal of the first infeed relative to the pulse-width modulation signal.

9. A system according to at least one of the preceding claims,
**characterised in that**
the clock signal is transmitted via a bus system, in particular fieldbus system and/or Ethernet
and/or **in that** further data beyond the clock signal can be transferred by means of the bus system.

10. A method for operating a system, comprising path sections (5, 15),
wherein each path section (5, 15) comprises a supply line into which a medium-frequency current is fed from an infeed associated with the respective path section (5, 15),
wherein each infeed comprises a control circuit (1, 11),
wherein a first one of the control circuits (1, 11), in particular master, transmits a clock signal for synchronising the further infeeds to these, in particular slave,
wherein each infeed comprises a respective medium-frequency voltage source operated in pulse-width modulated manner, the output voltage of which is supplied in each case to a gyrator as voltage-current converter (4, 14), the output current of which is fed into the respective supply line,
wherein the control circuits (1, 11) comprise means for synchronising with which the output voltages are generated with a phase relation synchronised to each other, i.e. are in phase,
wherein
- the control circuit (1, 11) is embodied as a digital system
and
- the synchronisation is based only on information which is present in the digital portion of the infeed.

11. A method according to Claim 10,
**characterised in that**
the clock signal in the first infeed is generated synchronously to control signals of an output stage, in particular an output stage comprising electronic power semiconductors for generating an output voltage,
in particular the clock signal and the switching instants of the control signals being derived from the same digital time-determining means, in particular counter.

12. A method according to Claim 10 or 11,
**characterised in that**
the further infeeds carry out the generation of pulse-width modulated control signals such that synchronisation of the control signals, in particular pulse-width modulation signals, to the clock signal is achieved.

13. A method according to one of Claims 10 to 12,
**characterised in that**
a controller is used to achieve the synchronisation,
in particular with a phase difference being supplied to the controller

14. A method according to Claim 13,
**characterised in that**
the frequency of an oscillator circuit is influenced by the output of the controller
and/or **in that**
the pulse-width modulation period is influenced by the output of the controller,
in particular the respective phase difference being determined from the phase of the respective pulse-width modulation signal and the clock signal
and/or **in that**
the change in frequency or change in period duration by the controller is carried out only with a limited maximum rate.

## Revendications

1. Équipement, comprenant des sections de trajet (5, 15),
sachant que chaque section de trajet (5, 15) comprend une ligne d'alimentation dans laquelle un courant à moyenne fréquence peut être injecté par une alimentation associée à la section de trajet respective (5 15),
sachant que chaque alimentation comprend un montage de commande (1, 11),
sachant qu'un premier des montages de commande (1, 11), notamment conçu comme maître, transmet aux autres alimentations, notamment conçues comme esclave, un signal d'horloge destiné à les synchroniser,
sachant que chaque alimentation comprend une source respective de tension à moyenne fréquence exploitée en modulation de largeur d'impulsions, dont la tension de sortie est respectivement apportée à un gyrateur comme convertisseur tension/courant (4-14), dont le courant de sortie est injecté dans la ligne d'alimentation respective,
sachant que les montages de commande (1, 11) comprennent des moyens de synchronisation, par lesquels les tensions de sortie sont produites avec des positions de phase synchronisées entre elles, donc sont en phase,
sachant que
- le montage de commande (1, 11) est réalisé sous forme de système numérique
et
- la synchronisation se fonde uniquement sur des informations qui sont présentes dans la partie numérique de l'alimentation.

2. Équipement selon la revendication 1, **caractérisé en ce que** le convertisseur tension/courant (4-14) et/ou l'inductance de la ligne d'alimentation avec des condensateurs associés est ou sont ajusté(e)s essentiellement en résonance à la moyenne fréquence.

3. Équipement selon au moins une des revendications précédentes, **caractérisé en ce que** des postes consommateurs (6, 16) peuvent être alimentés par induction à partir de la ligne d'alimentation, sachant notamment que les postes consommateurs (6, 16) comprennent une bobine secondaire qui peut être couplée par induction à la ligne d'alimentation réalisée sous forme de conducteur primaire (7, 17), sachant notamment qu'un condensateur est monté en série ou parallèle avec la bobine secondaire de telle sorte que la fréquence de résonance est essentiellement égale à la moyenne fréquence.

4. Équipement selon au moins une des revendications précédentes, **caractérisé en ce que** le montage de commande (1, 11) est prévu pour produire les signaux d'asservissement modulés en largeur d'impulsions qui sont destinés à l'étage de sortie.

5. Équipement selon au moins une des revendications précédentes, **caractérisé en ce que** le montage de commande (1, 11) de chaque autre alimentation comprend des moyens pour faire varier la période de modulation de largeur d'impulsions, sachant que la durée de période est modifiée en fonction du déphasage du signal d'horloge de la première alimentation par rapport au signal de modulation de largeur d'impulsions.

6. Équipement selon au moins une des revendications précédentes, **caractérisé en ce que** le montant de la modification de la période de modulation de largeur d'impulsions est inférieur par période à une valeur donnée, en particulier pour limiter l'écart de fréquence par rapport à la fréquence du signal d'horloge.

7. Équipement selon au moins une des revendications précédentes, **caractérisé en ce que** la fréquence de sortie d'un montage oscillateur de l'autre alimentation est modifiée en fonction du déphasage du signal d'horloge de la première alimentation par rapport au signal de modulation de largeur d'impulsions, en particulier pour modifier la fréquence d'horloge de base pour un microcontrôleur de l'autre alimentation.

8. Équipement selon au moins une des revendications précédentes, **caractérisé en ce que** la durée de période de l'allure dans le temps d'un contenu de compteur est modifiée en fonction du déphasage du signal d'horloge de la première alimentation par rapport au signal de modulation de largeur d'impulsions.

9. Équipement selon au moins une des revendications précédentes, **caractérisé en ce que** le signal d'horloge est transmis par l'intermédiaire d'un système de bus, en particulier d'un système de bus de champ et/ou d'Ethernet,
et/ou **en ce que** d'autres données peuvent être transmises en plus du signal d'horloge au moyen du système de bus.

10. Procédé d'exploitation d'un équipement comprenant des sections de trajet (5, 15),
sachant que chaque section de trajet (5, 15) comprend une ligne d'alimentation dans laquelle un courant à moyenne fréquence est injecté par une alimentation associée à la section de trajet respective (5 15),
sachant que chaque alimentation comprend un montage de commande (1, 11),
sachant qu'un premier des montages de commande (1, 11), notamment conçu comme maître, transmet aux autres alimentations, notamment conçues comme esclave, un signal d'horloge destiné à les synchroniser,
sachant que chaque alimentation comprend une source respective de tension à moyenne fréquence exploitée en modulation de largeur d'impulsions, dont la tension de sortie est respectivement apportée à un gyrateur comme convertisseur tension/courant (4-14), dont le courant de sortie est injecté dans la ligne d'alimentation respective,
sachant que les montages de commande (1, 11) comprennent des moyens de synchronisation, par lesquels les tensions de sortie sont produites avec des positions de phase synchronisées entre elles, donc sont en phase,
sachant que
- le montage de commande (1, 11) est réalisé sous forme de système numérique
et
- la synchronisation se fonde uniquement sur des informations qui sont présentes dans la partie numérique de l'alimentation.

11. Procédé selon la revendication 10, **caractérisé en ce que** le signal d'horloge dans la première alimentation est produit en synchronisme avec les signaux d'asservissement d'un étage de sortie, en particulier d'un étage de sortie comprenant des semi-conducteurs électroniques de puissance et destiné à produire une tension de sortie, sachant notamment que le signal d'horloge et les instants de commutation des signaux d'asservissement sont tirés du même moyen numérique de détermination du temps, compteur notamment.

12. Procédé selon la revendication 10 ou 11, **caractérisé en ce que** les autres alimentations réalisent la production de signaux d'asservissement modulés en largeur d'impulsions de telle sorte qu'on obtient une synchronisation des signaux d'asservissement, en particulier des signaux de modulation de largeur d'impulsions, avec le signal d'horloge.

13. Procédé selon l'une des revendications 10 à 12, **caractérisé en ce qu'**on utilise un régulateur pour obtenir la synchronisation, sachant notamment qu'une différence de phase est apportée au régulateur.

14. Procédé selon la revendication 13, **caractérisé en ce que** la fréquence d'un montage oscillateur est influencée par la sortie du régulateur et/ou **en ce que** la période de modulation de largeur d'impulsions est influencée par la sortie du régulateur, sachant notamment que la différence de phase respective est déterminée d'après la phase du signal respectif de modulation de largeur d'impulsions et du signal d'horloge,
et/ou **en ce que** la modification de fréquence ou la modification de durée de période par le régulateur n'est effectuée qu'avec un taux maximal limité.
